# EUROPEAN PATENT APPLICATION

(11) **EP 3 520 632 A1**
(43) Date of publication of application: **07.08.2019**
(21) Application number: 16921420.2
(22) Date of filing: 10.11.2016
(51) Int. Cl.: A24D 3/04

(54) **SPHERICAL POWDER AGGREGATE, AND PRODUCTION METHOD THEREFOR**

(71) Applicant: Japan Tobacco Inc., Tokyo 105-8422 (JP)
(72) Inventor: TERAO, Fumitaka, Tokyo 130-8603 (JP); SUEYOSHI, Shingo, Tokyo 130-8603 (JP); KAWATA, Masami, Tokyo 130-8603 (JP); TATEMATSU, Tadashi, Hamura-shi Tokyo 205-8503 (JP)
(74) Representative: Isarpatent
(86) International application number: PCT/JP2016/083429
(87) International publication number: WO 2018/087870

(57) **Abstract**

Provided are, a spherical powder aggregate which is formed from a material including a core material, a binder, and a thickener, and which has a particle size of 1.0-6.0 mm, a breaking strength of 5.0-25.0 N, and a strain ratio of 6.0-30.0%; and a production method for the spherical powder aggregate.

## Description

### [Technical Field]

The present invention relates to a spherical powder aggregate and to a production method therefor.

### [Background Art]

In known cigarettes, a powder inside a filter is inhaled to enjoy taste and/or aroma. For example, Patent document 1 discloses a feature wherein a particulate substance is accommodated in a chamber inside a filter, and is supplied to a delivery end through a fluid passage.

Patent document 2 discloses, as a technique related to cigarette products, a feature wherein a flavor is encapsulated in solid particles of natural polysaccharides or derivatives thereof.

Patent document 3 discloses a cigarette having a capsule in which a powder is encapsulated.

Patent document 4 discloses tobacco beads containing tobacco particles, and being disposed within a filter for the purpose of removing at least one smoke component from mainstream smoke.

Patent document 5 discloses a smoking article in which a sustained-release liquid delivery material is built into a filter part. The liquid delivery material disclosed in Patent document 5 includes a polymer matrix containing a matrix-forming polymer and a plasticizer, and alginic acid and pectins are described as the matrix-forming polymer.

### [Citation List]

### [Patent document]

[Patent document 1] Japanese Patent Application Publication No. S60-192581
[Patent document 2] Japanese Patent Application Publication No. S64-27461
[Patent document 3] WO 2014/155378
[Patent document 4] Japanese Translation of PCT Application No. 2008-531008
[Patent document 5] Japanese Translation of PCT Application No. 2014-532435

### [Summary of Invention]

### [Technical Problem]

In the inventions of Patent documents 1 to 3, a powder is used as a flavor itself or as a flavor carrier.

However, powder used in these inventions are not one obtained by shaping the powder itself, and these documents do not disclose any spherical powder aggregate that forms a fine-grained powder after being broken up.

Known general shaping methods used for instance in the field of foodstuffs include methods that have a wet type extrusion granulation step and a sizing step, and methods for obtaining a shaped product through spherical shaping of a powder using a pill making machine.

However, the shaped products obtained relying on such general powder shaping methods conventionally known for instance in the field foodstuffs were very hard, and it was difficult for the shaped products to be broken up into fine grains with the fingers.

The beads and liquid delivery material disclosed in Patent documents 4 and 5 are not envisaged to be broken up by the force of a user's fingers. The tobacco beads disclosed in Patent document 4 are produced by extrusion molding, and accordingly it is estimated that the beads cannot be broken up by the force of someone's fingers.

The material that forms the matrix structure constituting the liquid delivery material described in Patent document 5 is not a powder but a polymer requiring ionic cross-linking.

In view of the above state, it is an object of the present invention to provide a spherical powder aggregate that can be used for instance in smoking articles, the aggregate having such hardness as allows the aggregate to be broken up easily into fine grains with the fingers, while making such breaking pleasant to the user, and to provide a method for producing a spherical powder aggregate.

### [Solution to Problem]

As a result of diligent research, the inventors found that an aggregate can be broken up easily with the fingers, while making such breaking pleasant to the user, and such that a fine-grained powder is generated after breakup, utilizing a spherical powder aggregate made up of a material that contains a core material, a binder and a thickener, wherein the powder aggregate has a particle size of 1 to 6 mm, a breaking strength of 5.0 to 25.0 N, and a strain ratio of 6.0 to 30.0%.

Furthermore, as a result of diligent research, the inventors found that a spherical powder aggregate having the above physical properties is obtained in accordance with a method for producing a spherical powder aggregate that includes a first step of dropping a slurry containing a core material, a binder, a thickener, and water, into a powder in vibration, to form a first spherical intermediate composition including the slurry and the powder; a second step for obtaining a second spherical intermediate composition by drying the first spherical intermediate composition under a condition whereby a product temperature is 55 to 65°C; and a third step for obtaining a spherical powder aggregate by drying the second spherical intermediate composition under a condition whereby the product temperature is 125 to 135°C.

The present invention is as follows.
[1] A spherical powder aggregate of a material including a core material, a binder, and a thickener, wherein the powder aggregate has a particle size of 1.0 to 6.0 mm, a breaking strength of 5.0 to 25.0 N, and a strain ratio of 6.0 to 30.0%.
[2] The spherical powder aggregate of [1], wherein the core material is lactose.
[3] The spherical powder aggregate of [1] or [2], wherein the binder is one or more water-soluble polymers selected from a group consisting of starch, gelatin, gum arabic, polyvinyl alcohol and carboxymethyl cellulose.
[4] The spherical powder aggregate of any one of [1] to [3], wherein the thickener is one or more selected from a group consisting of gellan gum, xanthan gum, guar gum, gelatin, deacyled gellan gum, tamarind gum, carrageenan, locust bean gum, agar, and gum arabic.
[5] The spherical powder aggregate of any one of [1] to [4], wherein the content of the core material in the powder aggregate is 70 to 95 wt%.
[6] A method for producing a spherical powder aggregate, including: a first step of dropping a slurry containing a core material, a binder, a thickener and water, into a powder in vibration, to form a first spherical intermediate composition including the slurry and the powder; a second step for obtaining a second spherical intermediate composition by drying the first spherical intermediate composition under a condition whereby a product temperature is 55 to 65°C; and a third step for obtaining a spherical powder aggregate by drying the second spherical intermediate composition under a condition whereby the product temperature is 125 to 135°C.
[7] The method for producing a spherical powder aggregate of [6], wherein the core material and the powder are the same substance.
[8] The method for producing a spherical powder aggregate of [6] or [7], wherein the core material is lactose.
[9] The method for producing a spherical powder aggregate of any one of [6] to [8], wherein the binder is one or more water-soluble polymers selected from a group consisting of starch, gelatin, gum arabic, polyvinyl alcohol and carboxymethyl cellulose.
[10] The method for producing a spherical powder aggregate of any one of [6] to [9], wherein the thickener is one or more selected from a group consisting of gellan gum, xanthan gum, guar gum, gelatin, deacyled gellan gum, tamarind gum, carrageenan, locust bean gum, agar, and gum arabic.
[11] The method for producing a spherical powder aggregate of any one of [6] to [10], wherein drying in the second step is carried out with vibrating the first spherical intermediate composition.
[12] The method for producing a spherical powder aggregate of any one of [6] to [11], wherein drying in the third step is carried out with vibrating the second spherical intermediate composition.

### [Effects of Invention]

The spherical powder aggregate of the present invention exhibits a breaking strength that allows the aggregate to be broken up easily with the fingers, while making such breaking pleasant to the user, and such that fine grains of the spherical powder aggregate are generated after breakup. In a case where the spherical powder aggregate of the present invention is disposed for instance in a filter of a smoking article such as a cigarette, therefore, fine grains resulting from breaking by the smoker's fingers can reach easily into the oral cavity of the smoker.

The method for producing a spherical powder aggregate of the present invention allows providing a spherical powder aggregate having breaking strength such that the aggregate can be broken up easily with the fingers, while making such breaking pleasant to the user, and such that fine grains, and not large chunks, are generated after breakup.

### [Brief Description of Drawings]

Fig. 1 is a diagram illustrating states of a spherical powder aggregate during measurement of the breaking strength of the spherical powder aggregate.
Fig. 2 is a chart illustrating a relationship between the displacement of a probe contact of a rheometer and stress, in a measurement of breaking strength of a spherical powder aggregate.
Fig. 3 is a picture (photograph) illustrating states of a spherical powder aggregate prior to breakup and after breakup.
Fig. 4 is a chart illustrating a relationship between load and elapsed time in a measurement of a powder aggregate of Example 1, using a rheometer.
Fig. 5 is a chart illustrating a relationship between load and elapsed time in a measurement of a powder aggregate of Example 2, using a rheometer.
Fig. 6 is a chart illustrating a relationship between load and elapsed time in a measurement of a powder aggregate of Example 3, using a rheometer.
Fig. 7 is a chart illustrating a relationship between load and elapsed time in a measurement of a powder aggregate of Comparative example 1, using a rheometer.
Fig. 8 is a chart illustrating a relationship between load and elapsed time in a measurement of a powder aggregate of Comparative example 2, using a rheometer.

### [Description of Embodiments]

Embodiments, examples and so forth of the present invention will be explained in detail below, but the invention is not limited to the embodiments and examples illustrated below, and can accommodate arbitrary modifications without departing from the scope of the invention.

The spherical powder aggregate being one embodiment of the present invention is made up of a core material, a binder, and a thickener, and has a breaking strength of 5.0 to 25.0 N, as measured under MODE3 conditions using a rheometer with load cell maximum stress set to 200 N and at a table movement speed of 20.0 mm/min.

A strain ratio of the spherical powder aggregate of the present invention is 6.0 to 30.0%. The term strain ratio denotes herein a numerical value obtained, during measurement of breaking strength using the above rheometer, by dividing a distance by which a probe contact of the rheometer moves since contact with the powder aggregate until the powder aggregate breaks up, by the particle size of the powder aggregate, and multiplying then the result by 100. The strain ratio is also referred to as displacement at break. The lower the strain ratio, the smaller is the extent of compression of the powder aggregate at which breakup occurs.

The feature whereby the spherical powder aggregate of the present invention has the above range of breaking strength, and range of strain ratio, allows the powder aggregate to be broken up easily by a person's fingers, and contributes to imparting a pleasant breakup feel and to the formation of fine grains, and not large chunks, after breakup of the powder aggregate.

In some implementations, the range of breaking strength of the spherical powder aggregate of the present invention can be 6.5 to 23.0 N, or can be 7.5 to 20.0 N. The strain ratio can be 6.5 to 30.0% in some implementations, or can be 7.0 to 25.0%.

In some implementations of the spherical powder aggregate that is one embodiment of the present invention, the range of breaking strength can be 5.0 to 8.0 N, and the strain ratio can be 10.0 to 30.0%, when the range of particle size is 1.0 mm or more but less than 3.5 mm; in some implementations, the range of breaking strength can be 14.0 to 25.0 N and the strain ratio can be 6.0 to 15.0%, when the range of particle size is 3.5 mm or more but less than 4.5 mm; and in some implementations, the range of breaking strength can be 7.0 to 22.0 N and the strain ratio can be 6.0 to 16.0%, when the range of particle size is 4.5 mm to 6.0 mm.

The term powder aggregate in the present invention denotes one spherical mass resulting from aggregation of crystal grains made up of the materials that constitute the powder aggregate. For instance, a powder aggregate produced in accordance with the production method of the present invention is a product obtained through stepwise volatilization of water over a two-stage drying step of a mixture of a water-containing slurry and a powder. For instance, a core material dissolved in the slurry during the above process can precipitate in the form of crystal grains or the like that coalesce to form a spherical mass. The powder aggregate of the present invention is porous by virtue of being formed in such a way.

The term "spherical" in the spherical powder aggregate of the present invention is not limited to a true spherical aggregate, and encompasses substantially spherical aggregates and ellipsoid aggregates.

The particle size of the spherical powder aggregate is 1.0 to 6.0 mm. In the present invention, the particle size of the spherical powder aggregate signifies maximum size. In anticipation of the use in smoking articles such as cigarettes, the particle size of the aggregate is preferably 2.5 to 5.5 mm, and more preferably 3.0 to 4.5 mm.

In a case where the spherical powder aggregate is produced in accordance with the method described below, the particle size of the aggregate can be adjusted through adjustment of the diameter of a nozzle that is utilized during dropping of materials that include a core material, a binder, a thickener and water, into a powder.

Examples of the core material include sugars that are powdery at normal temperature, preferably lactose.

In some implementations, the content of the core material in the spherical powder aggregate is 70 to 95 wt%, and preferably 75 to 90 wt%, with respect to the total amount of the spherical powder spherical powder aggregate.

A preferred value of breaking strength of the powder aggregate can be achieved when the content of the core material lies in the above ranges.

A water-soluble polymer such as starch, gelatin, gum arabic, polyvinyl alcohol or carboxymethyl cellulose can be used as the binder. Starch can be preferably used among the foregoing.

In some implementations, the content of the binder in the spherical powder aggregate is 0.5 to 3.0 wt%, and preferably 0.8 to 2.0 wt%, with respect to the total amount of the spherical powder spherical powder aggregate.

A preferred value of breaking strength of the powder aggregate can be achieved when the content of the binder lies in the above ranges.

Examples of the thickener include gellan gum. Herein native-type gellan gum is preferably used. In native-type gellan gum, acetyl groups and glyceryl group are present in 1-3 bonded glucoses. The grades of average molecular weight of the native-type gellan gum used in the present invention include for instance 100,000 to 700,000 grades.

The above gellan gum can be used singly or can be used in combination with other thickeners listed below.

As thickeners other than gellan gum, there can be used for instance one or more thickeners selected from a group consisting of xanthan gum, guar gum, gelatin, deacyled gellan gum, tamarind gum, carrageenan, locust bean gum, pectins, agar, gum arabic and alginates.

Although a thickener requiring ionic cross-linking, such as pectins or alginates, can be used in the present invention, it is preferable to utilize a thickener that requires no such ionic cross-linking.

The presence of a thickener in the spherical powder aggregate of the present invention contributes to maintaining true sphericity during production.

In some implementations, the content of the thickener in the spherical powder aggregate is 0.01 to 0.2 wt%, and preferably 0.01 to 0.1 wt%, with respect to the total amount of the spherical powder spherical powder aggregate.

Preferably, the spherical powder aggregate contains a medium-chain triglyceride. The presence of a medium-chain triglyceride allows preventing the formation of a fine powder derived from collapse of the spherical powder aggregate during storage or transport.

The medium-chain fatty acid can have 6 to 12 carbon atoms.

The content of the medium-chain triglyceride in the spherical powder aggregate can be 4.0 to 15.0 wt% in some implementations.

In a case where the spherical powder aggregate contains a medium-chain triglyceride, a surfactant such as lecithin can be used in order to adjust the properties of the medium-chain triglyceride in the starting material used for producing the spherical powder aggregate. In such a case a surfactant such as lecithin is incorporated into the spherical powder aggregate. A commercial product can be used as the lecithin. The content of surfactant in a spherical powder aggregate that contains a surfactant can be 0.5 to 5.0 wt% in some implementations.

The spherical powder aggregate of the present invention can contain a seasoning agent. The seasoning agent is not particularly limited, and can be for instance sucralose.

In some implementations, the content of such a seasoning agent in the spherical powder aggregate can be 0.5 to 5.0 wt% with respect to the total amount of the spherical powder aggregate.

The spherical powder aggregate of the present invention can contain a flavor. The type of the flavor is not particularly limited, and existing flavor can be used herein. Powder flavors and oily flavors are suitable among the foregoing. Examples of major powder flavors include powders of chamomile, fenugreek, menthol, peppermint, cinnamon and herbs. Examples of major oily flavors include oils of lavender, cinnamon, cardamom, celery, clove, cascarilla, nutmeg, sandalwood, bergamot, geranium, honey essence, rose oil, vanilla, lemon, orange, peppermint, cinnamon, caraway, cognac, jasmine, chamomile, menthol, cassia, ylang-ylang, serge, spearmint, fennel, pimento, ginger, anise, coriander, and coffee. These powder flavors and oily flavors can be used singly or in mixtures. In a case where a powder flavor used, the particle size thereof is preferably 500 µm or smaller. The flavor is preferably substantially soluble in liquids or in the oral cavity. The addition amount of the flavor component is preferably 10 wt% or less with respect to the core material.

The moisture content of the spherical powder aggregate is preferably 0.3 to 1.5 wt%, and more preferably 0.4 to 1.0 wt%. Such a moisture content contributes to securing the below-described breaking strength of the spherical powder aggregate.

The spherical powder aggregate can contain a component preferably used in the production process of the spherical powder aggregate, for instance a surfactant such as lecithin, necessary for dissolving the above fatty acid triglyceride.

In some implementations, the content of the other component can be 3.0 wt% or less with respect to the spherical powder aggregate.

It is deemed that the porosity in the interior of the powder aggregate of the present invention is high and voids are present uniformly within the aggregate, without concentrating only at the central portion thereof; further, crack-like voids are present also on the surface of the aggregate, and accordingly it can be expected that the aggregate absorbs and also holds easily a liquid substance such as a flavor.

Therefore, the powder aggregate of the present invention can be used in applications where the aggregate functions as a holding or supporting material of a flavor.

The periphery of the powder aggregate of the present invention can be coated with an appropriate coating agent. Examples of the coating agent include for instance shellac, hydrogenated oils, hydroxypropyl methylcellulose and pullulan.

### <Breaking strength and measurement method thereof>

The breaking strength of the spherical powder aggregate of the present invention is 5.0 to 25.0 N.

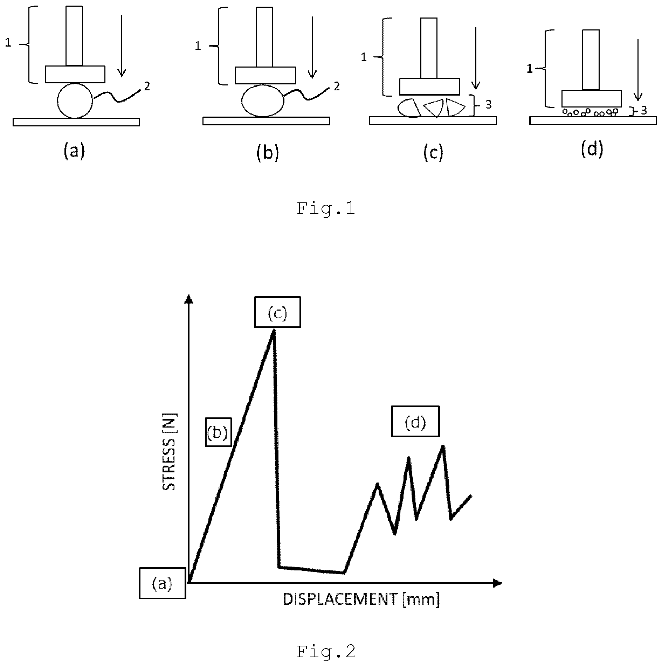

The measurement of breaking strength is carried out by going through the various states illustrated in (a) through (d) of Fig. 1. Fig. 2 illustrates schematically a relationship between displacement (strain distance) at respective points in time, and stress.

Herein (a) in Fig. 1 illustrates a state (point in time (a) in Fig. 2) in which a probe contact of a rheometer descends and touches a spherical powder aggregate.

Further, (b) in Fig. 1 illustrates a state in which descent of the probe contact of the rheometer continues, and the spherical powder aggregate starts being strained, whereby stress is generated in the probe contact. As illustrated in (b) of Fig. 2, the relationship between strain distance and stress is basically a first-order linear relationship.

Further, (c) in Fig. 1 illustrates a state in which the spherical powder aggregate has broken up after having become strained to a given extent. As illustrated in (c) in Fig. 2, the maximum value of stress immediately prior to breakup corresponds to the breaking strength, and the displacement at that point in time is taken as the displacement at break. Stress is relieved immediately following breakup, and approaches 0 N instantaneously.

Next, (d) in Fig. 1 illustrates a state resulting from continued descent of the probe contact, also after breakup of the spherical powder aggregate, whereupon the fragments of the broken up spherical powder aggregate broken in the above (c) are further broken up yet more finely (see (d) in Fig. 2). As (d) in Fig. 2 illustrates, stress is generated by individual fragments, also at this stage.

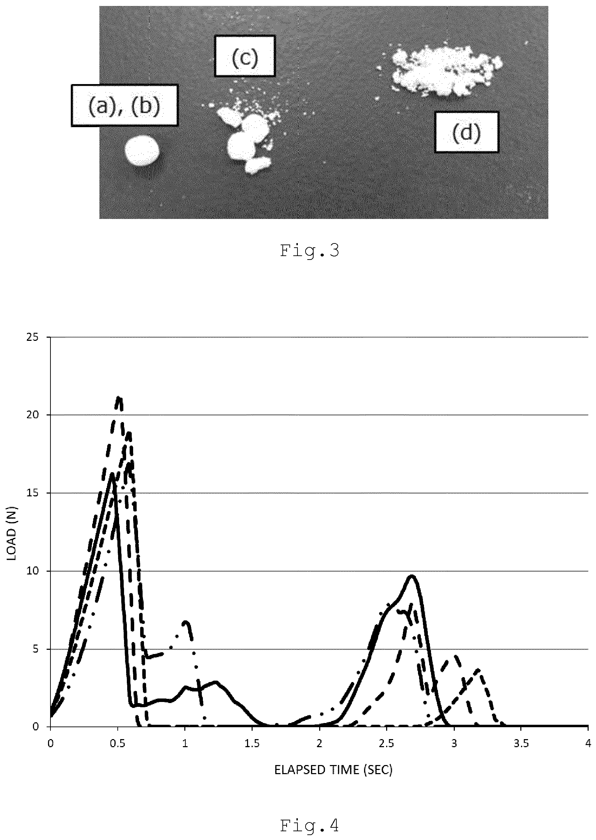

Fig. 3 is a photograph depicting a spherical powder aggregate in the (a) and (b) states, a spherical powder aggregate in the (c) state, and a spherical powder aggregate in the (d) state, respectively.

For instance, CR-3000EX-S by Sun Scientific Co. Ltd. can be used as the rheometer utilized for measuring breaking strength. A probe contact for compressive strength testing is used as the probe contact.

The descent speed of the probe contact is set to 20.0 mm/min, and a range of 1.0 to 6.0 mm is taken as the particle size of the spherical powder aggregate acting on the rheometer.

The method for producing a spherical powder aggregate of the present invention includes the following steps.

A first step of dropping a slurry containing a core material, a binder, a thickener, and water, into a powder in vibration, to form a first spherical intermediate composition made up of the slurry and the powder; a second step for obtaining a second spherical intermediate composition by drying the first spherical intermediate composition under a condition whereby a product temperature is 55 to 65°C; and a third step for obtaining a spherical powder aggregate by drying the second spherical intermediate composition under a condition whereby the product temperature is 125 to 135°C.

In the first step, there is firstly prepared a slurry containing a core material, a binder, a thickener, and water.

The slurry can be prepared firstly through addition of a thickener, a binder and a core material, in this order, to water warmed to 70 to 80°C.

Prior to addition of the thickener, a medium-chain triglyceride can be added for the purpose of preventing generation of a fine powder during storage or transport of the spherical powder aggregate. A surfactant such as lecithin can also be added, prior to addition of the thickener, for the purpose of emulsifying the medium-chain triglyceride. In a case where an emulsifier is added to the medium-chain triglyceride, there can be carried out a stirring operation in order to emulsify the medium-chain triglyceride. In some implementations, the stirring operation can involve stirring at about 4000 to 6000 rpm for about 10 to 20 minutes.

Preferably, the slurry is temporarily cooled down to 30°C or below, prior to addition of the core material, in order to adjust viscosity to a value suitable for dropping.

A sweetener can be added after addition of the core material to the slurry. Thereafter, an alcohol such as ethyl alcohol for adjustment of the dropping amount of the slurry (for adjustment of the surface tension of the slurry) can be added to the slurry.

In some implementations, the content of water in the slurry can be 15 to 50 wt%, with respect to the total amount of the slurry (hereafter also referred to as slurry for dropping) during dropping into the powder in vibration, and is preferably 27.5 to 40 wt%, from the viewpoint of fulfilling a function as a dispersant of the slurry for dropping and of imparting moderate viscosity to the slurry for dropping.

The content of the core material with respect to the total amount of the slurry for dropping can be 50 to 80 wt% in some implementations, but is preferably 55 to 65 wt%, from the viewpoint of imparting moderate breaking strength and sufficient density to the spherical powder aggregate that is the final product. The true sphericity of the spherical powder aggregate can be improved by increasing the content of the core material with respect to the total amount of the slurry for dropping.

A sugar that is a powder at normal temperature, such as lactose, is preferably used as the material of the core material.

The content of the binder with respect to the total amount of the slurry for dropping can be 0.1 to 3 wt% in some implementations, but is preferably 0.5 to 1.5 wt%, from the viewpoint of imparting moderate breaking strength to the spherical powder aggregate that is the final product.

A water-soluble polymer such as starch, gelatin, gum arabic, polyvinyl alcohol or carboxymethyl cellulose can be used as the binder. Starch can be preferably used among the foregoing.

The content of the thickener with respect to the total amount of the slurry for dropping can be 0.001 to 0.2 wt% in some implementations, but is preferably 0.001 to 0.05 wt%, since in that case moderate viscosity can be imparted to the slurry for dropping, and the dropping rate into the powder can be adjusted readily. Incorporating thus a thickener into the slurry allows preserving droplet shape during dropping of the slurry, and increasing and the true sphericity of the spherical powder aggregate that is the final product.

Examples of the thickener include gellan gum. Herein native-type gellan gum is preferably used. In native-type gellan gum, acetyl groups and glyceryl group are present in 1-3 bonded glucoses. The grades of average molecular weight of the native-type gellan gum used in the present invention include for instance 100,000 to 700,000 grades.

The gellan gum can be used singly or can be used in combination with other thickeners listed above.

In the method for producing a spherical powder aggregate of the present invention, there is no need for resorting to ionic cross-linking in order to form the powder aggregate, and hence there is no need for using, as the thickener, a thickener with ionic cross-linking.

In a case where the slurry contains a medium-chain triglyceride, the content of the medium-chain triglyceride with respect to the total amount of the slurry for dropping can be 2.5 to 10 wt% in some implementations, and is preferably 3.5 to 7.5 wt%, since in that case it becomes possible to prevent generation of a fine powder derived from collapse of the surface of the spherical powder aggregate, which is the final product, during storage and/or transport.

The medium-chain triglyceride can have 6 to 12 carbon atoms.

In some implementations, also a surfactant can be incorporated into the slurry in a case where the slurry contains a medium-chain triglyceride. In that case, the content of the surfactant with respect to the total amount of the slurry for dropping can be 0.1 to 3.0 wt% in some implementations. Concrete examples of the surfactant include lecithin. A commercial product of lecithin can be used herein.

In the first step, the slurry containing the above materials is dropped into a powder in vibration (into-powder dropping), the amount of the powder being herein an excess amount with respect to the slurry that is dropped. In some implementations, a nozzle having an appropriate nozzle diameter can be used for dropping.

An appropriate alcohol, for instance ethyl alcohol, can be incorporated into the slurry for dropping, for the purpose of lowering the surface tension at the tip portion of the nozzle that is used for dropping. The content of the alcohol in the slurry for dropping can be 2.0 to 5.0 wt%.

Examples of the powder into which the slurry is dropped include for instance a sugar that is a powder at normal temperature, similarly to the core material that is contained in the spherical powder aggregate. Concrete examples of the powder include lactose. Using a material identical to the core material contained in the spherical powder aggregate is preferable herein since in that case the slurry and the powder exhibit good affinity during dropping of the slurry into the powder, which results in stable properties of the spherical powder aggregate that is the final product. The material of the powder is however not particularly limited, even if the core material contained in the slurry that is dropped and the powder into which the slurry is dropped are different materials, provided that the powder and the slurry exhibit good affinity during dropping of the slurry and so long as the first spherical intermediate composition that yields the spherical powder aggregate can be generated.

The number of drops per unit time during dropping of the slurry into the powder can be 180 to 2500 drops/minute, and the weight per drop can be 25 to 30 mg/drop.

The slurry is dropped into the powder while the powder is in vibration. Through dropping into an excess amount of powder in vibration, a first spherical intermediate composition is generated in that the drops of the slurry absorb quickly the powder that surrounds the periphery of the drops, while the spherical or substantially spherical shape of the drops is preserved. The frequency of a vibrating feeder is not particularly limited, so long as the sphericity of the first spherical intermediate composition can be preserved, and can be for instance a frequency of 40 to 60 Hz.

Examples of the means for causing the powder to vibrate include a vibrating feeder. In a case where a feeder doubling as a transport means is used as the vibrating feeder, the first spherical intermediate composition can be generated continuously, through continuous dropping of the slurry, by fixing a nozzle used for slurry dropping and causing the powder onto which the slurry is dropped to vibrate, while the powder is conveyed. Through the use of a vibrating feeder doubling as a transport means it becomes possible to recover the generated first spherical intermediate composition into a recovery container that is disposed at a delivery end. The particle size the spherical powder aggregate that is the final product can be adjusted through modification of the diameter of the nozzle that is used for slurry dropping.

The first spherical intermediate composition results from addition of the powder that is the target of dropping, to the slurry that is dropped. The dropping timing and the transport speed by the vibrating feeder doubling as a transport means can be adjusted as appropriate, and for instance the speed can be adjusted so that the spherical first intermediate composition be generated at a speed of 180 spheres/min.

The moisture content of the first spherical intermediate composition is preferably 10 to 14 wt%. Such a moisture content of the first spherical intermediate composition is preferable since in that case the strength of the spherical powder aggregate which is the final product, resulting from drying at a subsequent second step and third step, lies within a predetermined range.

In the second step, the first spherical intermediate composition is dried under conditions such that the product temperature is about 55 to 65°C, more preferably about 58 to 62°C, and particularly preferably about 60°C. Preferably, the moisture content of the first spherical intermediate composition at this time is lowered to about 8 to 11 wt%. Examples of means for eliciting drying under conditions such that the product temperature is about 55 to 65°C include drying by directing warm air against the first spherical intermediate composition. Preferably, the first spherical intermediate composition is dried, while being vibrated, through directing of warm air against the composition. By directing thus warm air against the first spherical intermediate composition while under vibration, the warm air strikes the composition uniformly, and moisture volatilization bias is avoided. The vibration conditions are not particularly limited, and can include for instance a frequency of 20 to 40 Hz.

To be dried while being vibrated, the first spherical intermediate composition is preferably set on a material having good air permeability, for instance a sieve.

Preferably the temperature of warm air used for drying is about 65 to 75°C. Within such a temperature range, water can be prevented from volatilizing abruptly from the first spherical intermediate composition, and cracks or the like can be prevented from occurring in the first spherical intermediate composition, while the product temperature of the first spherical intermediate composition can be adjusted to a desired range.

The drying time is not particularly limited so long as the product temperature of the first spherical intermediate composition can be maintained at about 55 to 65°C, and can be for instance 8 to 10 minutes.

A second spherical intermediate composition is obtained as a result of the second step. The breaking strength of the spherical powder aggregate that is the final product is significantly influenced by the temperature condition (product temperature) at the time of drying for obtaining the second spherical intermediate composition.

When the product temperature at the time of drying of the first spherical intermediate composition is lower than the above range, moisture content cannot be reduced sufficiently, and the shape of the spherical intermediate composition being dried may fail to be preserved. When, on the other hand, the product temperature during drying of the first spherical intermediate composition is higher than the above range, for instance cracks may occur in the spherical intermediate composition on account of a sharp decrease in moisture content, and the spherical intermediate product is exposed to high temperature in a state where a large amount of water is present in the interior of and the surface of the spherical intermediate product, as a result of which intermediate product spheres may adhere to each other.

The second spherical intermediate composition having been dried in the second step is then dried by hot air drying in the third step. In drying by hot air, the second spherical intermediate composition is dried so that the product temperature thereof is about 125 to 135°C, more preferably about 128 to 132°C, and particularly preferably about 130°C. The temperature of a hot air dryer is set herein so that the temperature of hot air at that time is about 210 to 230°C, preferably about 220°C. When the product temperature at the time of drying of the second spherical intermediate composition is lower than the above ranges, changes such as so-called vitrification do not occur on the surface of the second spherical intermediate composition, and the breaking strength of the powder aggregate that is obtained might be smaller than a desired range. When, by contrast, the product temperature at the time of drying of the second spherical intermediate composition is higher than the above ranges, the surface of the spherical intermediate composition may become burnt.

The drying time can be, for instance, about 3 to 5 minutes, preferably about 3.5 to 4.5 minutes. Preferably, the second spherical intermediate composition is dried, while being vibrated, through directing of hot air against the composition. By being dried while under vibration it becomes possible to prevent local heating of the second spherical intermediate composition.

When the second spherical intermediate composition is dried by hot air, the surface thereof is hardened into a glass-like state, and a spherical powder aggregate that exhibits a desired breaking strength is obtained.

The moisture content of the spherical powder aggregate obtained as a result of the third step is preferably 0.3 to 1.5 wt%, and more preferably 0.4 to 1.0 wt%. Such a moisture content contributes to bringing about a predetermined breaking strength as described below.

The moisture content of the spherical powder aggregate that is finally obtained can be adjusted as appropriate through suitable modification of the drying conditions by hot air.

Breaking strength can be measured in accordance with the same method as set forth in 1 above. The breaking strength of the obtained spherical powder aggregate is 5.0 to 25.0 N. The breaking strength can be adjusted through adjustment of the drying conditions in the second step and the third step.

In some implementations, the particle size of the obtained spherical powder aggregate can be 1.0 to 6.0 mm.

After the third step, a known classification means can be used on the obtained spherical powder aggregate in order to sort just only a powder aggregate having a predetermined particle size.

In some implementations, aggregates are classified according to a desired particle size range, for example, 2.5 to 3.5 mm, 3.5 to 4.5 mm, or 4.5 to 6.0 mm, within a particle size range of 1.0 to 6.0 mm.

Besides the classification step, the method can further include a step of flavoring the spherical powder aggregate, or a step of coating the spherical powder aggregate.

The aggregate can be flavored by using the flavors described in 1. above. A known method can be resorted to, for instance spraying or impregnation as the flavoring means to that end.

Coating can involve coating the surface of the spherical powder aggregate with an appropriate coating agent, such as shellac, a hydrogenated oil, hydroxypropyl methylcellulose or pullulan.

A method of use of the spherical powder aggregate of the present invention can involve arranging the spherical powder aggregate, after having had the flavor incorporated thereinto, in a filter of a smoking article. The filter is provided with a flow path that is traversed by a fine powder resulting from breaking of the spherical powder aggregate. In such an application, the user presses the filter during use of the smoking article, whereupon the spherical powder aggregate inside the filter breaks up and the resulting fine powder is inhaled by the smoker; as a result, some flavor can be provided to the smoker along with the smoking taste.

More specific examples of implementations of a smoking article include a smoking article provided with a tobacco rod containing shredded tobacco, and with a filter connected to an end of the tobacco rod via tipping paper, wherein the filter includes the spherical powder aggregate of the present invention, a cavity in which the spherical powder aggregate is disposed, and a flow path that connects the cavity and a mouthpiece end allows passage of the fine powder generated from the spherical powder aggregate, the flow path having a smaller inner diameter than an outer diameter of the spherical powder aggregate.

In such an implementation, the spherical powder aggregate is held inside the filter, while not yet in use. During use of the article, the spherical powder aggregate inside the filter is made into a powder in that the user exerts an external force on the filter, as a result of which the spherical powder aggregate can be introduced, simultaneously with mainstream smoke, into the oral cavity.

### Examples

The present invention will be explained in further detail next by way of examples. Without departing from the scope of the invention, however, the invention is not meant to be limited to the disclosure in the examples below.

### <Example 1>

A slurry was prepared as a material for producing a spherical powder aggregate.

Herein, 10 parts by weight of lecithin (The Nisshin OilliO Group, Ltd.: BASIS LP-20E) and 50 parts by weight of a medium-chain triglyceride were added to 289.75 parts by weight of water warmed to 80°C, with emulsification through stirring for 15 minutes at 5000 rpm, using an emulsifier (HOMOMIXER Mark II, manufactured by PRIMIX), to yield a slurry.

Then, 0.25 parts by weight of gellan gum (Gel Up J-7842 by San-Ei Gen F.F.I., Inc.) as a thickener, 10 parts by weight of starch (PD #100, manufactured by Matsutani Chemical Industry Co., Ltd.) and 600 parts by weight of lactose (Pharmatose 100M (registered trademark)) were added, in this order, to the slurry. Lactose was added after the temperature of the slurry had been brought to 30°C or below.

Thereafter, 8 parts by weight of sucralose as a sweetener and 32 parts by weight of ethanol for adjustment of the dropping amount of slurry were added to the slurry, and the whole was dispersed for 5 minutes at 4000 rpm using a disperser (Homodisper manufactured by PRIMIX Corporation), to yield a slurry for dropping.

The slurry for dropping thus obtained was dropped onto a vibrating feeder on which powdery lactose, as a powder, had been spread in an excess amount with respect to the slurry. As the slurry was dropped, vibration was imparted at a vibrating feeder frequency or 55 Hz.

The dropping rate of the slurry was set to 180 to 200 drops/minute and the weight per drop was set to 25 to 30 mg/drop.

Upon continuous dropping of the slurry into the vibrating feeder at the above rate, the falling droplets became buried into the powdery lactose at the same time that lactose wrapped around the droplets, thereby eliciting instantaneous formation of a spherical composition (first spherical intermediate composition).

The first spherical intermediate composition was transported from the upstream side towards the downstream side, while under vibration on the vibrating feeder, and was recovered in a recovery container disposed at the downstream end.

As a next step, the obtained first spherical intermediate composition was dried with warm air. During warm air drying, the first spherical intermediate composition was disposed on a vibrating-type sieve, an air supply temperature was set to 70°C, and drying was carried out for 8 to 10 minutes under a condition whereby the product temperature was 60°C (measured using a radiation thermometer). During drying, the sieve having the first spherical intermediate composition disposed thereon was vibrated (phase: 8 (20 to 30 Hz)), to elicit vibration of the first intermediate spherical composition on the sieve, so that the composition was struck uniformly with warm air as a result. The product temperature was measured using a radiation thermometer.

The moisture content in the first spherical intermediate composition was lowered, through such drying, down to about 10 wt%, to yield a second spherical intermediate composition.

As a subsequent step, the obtained second spherical intermediate composition was dried with hot air. Specifically, the second spherical intermediate composition was disposed on a vibrating-type sieve, similarly to what was the case in the above drying by warm air, and with the air supply temperature set to 220°C, was then dried for 4 minutes under a condition whereby the product temperature was 130°C (measured by a radiation thermometer). During drying, the sieve having the second spherical intermediate composition disposed thereon was vibrated (phase: 8 (20 to 30 Hz)), to elicit vibration of the second intermediate spherical composition on the sieve, so that the composition was struck uniformly with hot air thereby.

As a result of such drying there was obtained a spherical powder aggregate with a moisture content of 0.5 wt%.

The spherical powder aggregate obtained in the above production method was Example 1. Spherical powder aggregates having an average particle size different from that of Example 1 were produced (Examples 2 and 3) using the same materials and in accordance with the same procedure.

For comparison, there were prepared a powder aggregate of Comparative example 1 obtained through drying under a condition whereby the drying temperature (product temperature) in the third step of the above production method was 80°C, and there was prepared a powder aggregate of Comparative example 2 obtained through shaping in a pill making machine.

The preparation method in Comparative example 2 was as follows.

In order to obtain a plate-like kneaded product to be set in a pill making machine, firstly water (23.5 wt%), lactose (75 wt%), gellan gum (0.5 wt%) and starch (10 wt%) were charged in this order into a stirring mixer, with kneading for 1 hour at room temperature.

Next the obtained clay-like kneaded product was shaped in the form of a plate, and was set in the pill making machine.

The clearance between a drum and a mold plate in the pill making machine was set to 4.0 mm, and the charge was spherically granulated, to yield a spheroidized clay-like kneaded product.

The obtained spheroidized clay-like kneaded product was dried through exposure to hot air at 70°C, to bring the moisture content to 0.8 wt% or less and yield a spherical powder aggregate having a particle size of about 4.2 to 4.8 mm, as a final product.

Each powder aggregate was subjected to a test involving measuring the states illustrated in Fig. 1, using a rheometer CR-3000EX-S (by Sun Scientific Co. Ltd.). A probe contact for compressive strength testing was used as the probe contact.

The descent speed of the probe contact at the time of measurement by the rheometer was set to 20.0 mm/min.

The results are given in Table 1.

**[Table 1]**

| | Top: average particle size (mm) | Top: breaking strength (maximum load: N) | Top: strain ratio (%) |
|---|---|---|---|
| | Bottom: standard deviation | Bottom: standard deviation | Bottom: standard deviation |
| Example 1 (n = 10) | 4.4 | 19.3 | 10.7 |
| | 1.3 | 7.6 | 3.8 |
| Example 2 (n = 19) | 5.2 | 13.0 | 9.6 |
| | 0.4 | 4.1 | 2.8 |
| Example 3 (n = 10) | 3.1 | 6.4 | 19.0 |
| | 0.2 | 1.1 | 9.7 |
| Comparative ex. 1 (n = 8) (modified heating condition in third step) | 4.6 | 6.2 | 4.8 |
| | 0.2 | 1.7 | 0.8 |
| Comparative ex. 2 (n = 9) (Formed using pill making machine) | 4.5 | 25.4 | 46.5 |
| | 0.2 | 3.5 | 15.2 |

The powder aggregates of Examples 1 to 3 had a moderate breaking strength and strain ratio such that the powder aggregates could be broken up pleasantly with the fingers.

A sufficient strain ratio could not be obtained in a case where the prescribed drying temperature in the production method of the present invention was not satisfied, as in Comparative example 1.

The powder aggregate produced in the pill making machine in Comparative example 2 was extremely hard, and could not be broken up with the fingers. The strain ratio was likewise very high, and the powder aggregates could not be broken up pleasantly.

Figs. 4 to 8 illustrate relationships between load at the time of measurement by a rheometer and passage of time, the measurements being carried out in order to obtain the results illustrated in Table 1, for the respective examples and comparative examples. In Figs. 4 to 8, the vertical axis represents load (N) and the horizontal axis represents time (seconds) .

Fig. 4 (results of Example 1) revealed that with the maximum load (breaking strength) lying in a range appropriate for breaking with the fingers, the fragments generated through breaking were small, since it took some time for the probe contact to touch the fragments. It was found that the breaking strength of the fragments was fairly lower than the breaking strength of the powder aggregate prior to breaking.

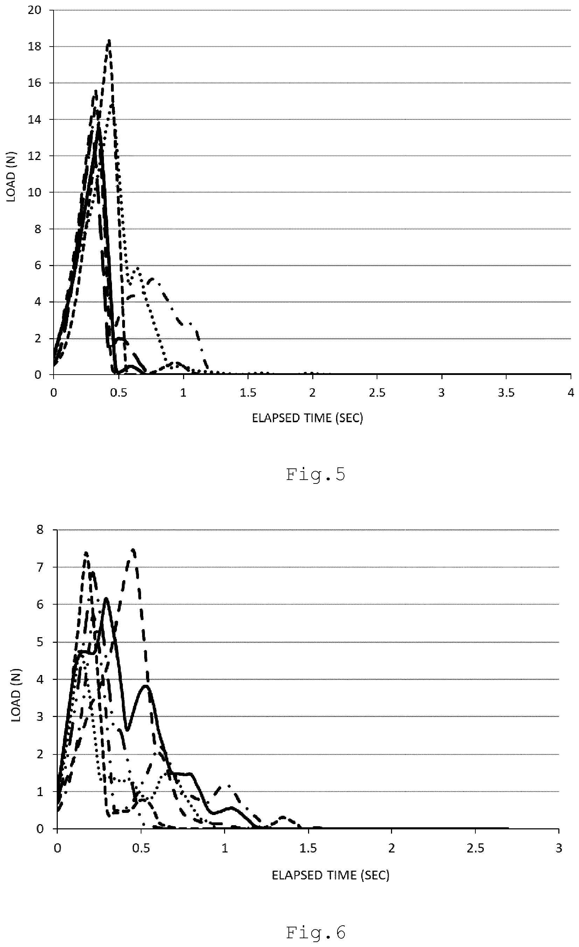

Fig. 5 (results of Example 2) revealed that maximum load was similar to that of Example 1. There were observed virtually no peaks for a load derived from contact of fragments generated by breaking with the probe contact. This suggests that the fragments generated through breaking of the powder aggregate were finer than those in Example 1.

Fig. 6 (results of Example 3) revealed that virtually no load peak was observed that derived from contact of fragments generated by breaking with the probe contact, although the maximum load was smaller than that in Example 1. This suggests that, as in Example 2, the fragments generated through breaking of the powder aggregate were finer than those in Example 1.

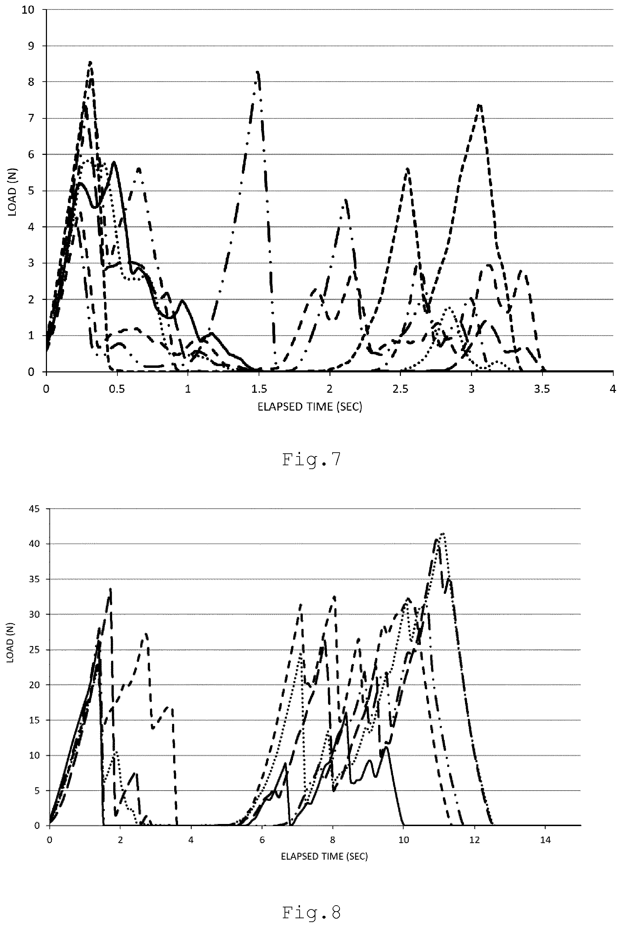

Fig. 7 (results of Comparative example 1) revealed that the maximum load was smaller than that in Example 1. It was found that the patterns of breakup are unstable, since load peaks are distributed depending on the sample. It was found that fragments generated after breakup were large, depending on the elapsed time of a peak arising after breakup. In such a case breaking with the fingers is not pleasant to the user.

The results in Fig. 8 (results of Comparative example 2) showed that maximum load was much larger than that in Example 1 and breakup with the fingers was difficult. It was also found that fragments generated after breakup were large, and the load required in order to break the fragments was likewise large, depending on the load and on the elapsed time of the peak arising after breakup. In such a case breaking with the fingers was not pleasant to the user, similarly to Comparative example 1.

### [Industrial Applicability]

The breaking strength of the spherical powder aggregate of the present invention allows for easy and pleasant breaking with the fingers, such that fine grains of the spherical powder aggregate are generated after breakup. In a case where the spherical powder aggregate of the present invention is disposed for instance in a filter of a smoking article such as a cigarette, therefore, fine grains resulting from breaking by the smoker's fingers can easily reach into the oral cavity of the smoker. The delivery efficiency of a powdery flavor source into the user can be improved as a result, in cases where a flavor or the like is added to the spherical powder aggregate.

The method for producing a spherical powder aggregate of the present invention allows providing a spherical powder aggregate having breaking strength such that the aggregate can be broken up easily and pleasantly with the fingers, and such that fine grains, and not large chunks, are generated after breakup. This manufacturing method makes for stable machine production, unlike in the production of conventionally known capsule articles in which a coating film is formed through ionic cross-linking.

### [Reference Signs List]

- 1: Rheometer probe contact
- 2: Spherical powder aggregate
- 3: Powder aggregate after breakup

## Claims

1. A spherical powder aggregate of a material comprising a core material, a binder, and a thickener, wherein the powder aggregate has a particle size of 1.0 to 6.0 mm, a breaking strength of 5.0 to 25.0 N, and a strain ratio is 6.0 to 30.0%.

2. The spherical powder aggregate according to claim 1, wherein the core material is lactose.

3. The spherical powder aggregate according to claim 1 or 2, wherein the binder is one or more water-soluble polymers selected from a group consisting of starch, gelatin, gum arabic, polyvinyl alcohol and carboxymethyl cellulose.

4. The spherical powder aggregate according to any one of claims 1 to 3, wherein the thickener is one or more selected from a group consisting of gellan gum, xanthan gum, guar gum, gelatin, deacyled gellan gum, tamarind gum, carrageenan, locust bean gum, agar, and gum arabic.

5. The spherical powder aggregate according to any one of claims 1 to 4, wherein the content of the core material in the powder aggregate is 70 to 95 wt%.

6. A method for producing a spherical powder aggregate, the method comprising: a first step of dropping a slurry containing a core material, a binder, a thickener, and water, into a powder in vibration, to form a first spherical intermediate composition including the slurry and the powder; a second step for obtaining a second spherical intermediate composition by drying the first spherical intermediate composition under a condition whereby a product temperature is 55 to 65°C; and a third step for obtaining a spherical powder aggregate by drying the second spherical intermediate composition under a condition whereby the product temperature is 125 to 135°C.

7. The method for producing a spherical powder aggregate according to claim 6, wherein the core material and the powder are the same substance.

8. The method for producing a spherical powder aggregate according to claim 6 or 7, wherein the core material is lactose.

9. The method for producing a spherical powder according to any one of claims 6 to 8, wherein the binder is one or more water-soluble polymers selected from a group consisting of starch, gelatin, gum arabic, polyvinyl alcohol, and carboxymethyl cellulose.

10. The method for producing a spherical powder according to any one of claims 6 to 9, wherein the thickener is one or more selected from a group consisting of gellan gum, xanthan gum, guar gum, gelatin, deacyled gellan gum, tamarind gum, carrageenan, locust bean gum, agar, and gum arabic.

11. The method for producing a spherical powder according to any one of claims 6 to 10, wherein drying in the second step is carried out with vibrating the first spherical intermediate composition.

12. The method for producing a spherical powder according to any one of claims 6 to 11, wherein drying in the third step is carried out with vibrating the second spherical intermediate composition.
